## Europäisches Patentamt

## European Patent Office

## Office européen des brevets

(19)

(11) Veröffentlichungsnummer: **0 090 158**
A2

# EUROPÄISCHE PATENTANMELDUNG

(21) Anmeldenummer: 83101315.6

(22) Anmeldetag: 11.02.83

(51) Int. Cl.³: **B 27 C 1/02**

(30) Priorität: 25.03.82 DE 3210897

(43) Veröffentlichungstag der Anmeldung: 05.10.83
**Patentblatt 83/40**

(84) Benannte Vertragsstaaten: **AT FR**

(71) Anmelder: **Mafell-Maschinenfabrik Rudolf Mey GmbH & Co. KG, Postfach 1180, D-7238 Oberndorf a.N. Aistaig (DE)**

(72) Erfinder: **Heinzelmann, Werner, Felbenstrasse 3, D-7238 Oberndorf (DE)**
Erfinder: **Lehmann, Rüdiger, Waseneckstrasse 3, D-7238 Oberndorf (DE)**

(74) Vertreter: **Schmid, Berthold et al, Patentanwälte Dipl.-Ing. B. Schmid Dr. Ing. G. Birn Falbenhennenstrasse 17, D-7000 Stuttgart 1 (DE)**

(54) Vorrichtung zum Heben und Senken eines Arbeitstisches einer Werkzeugmaschine.

(57) Um den Arbeitstisch (23) einer Werkzeugmaschine mit Motorantrieb, insbesondere einer Abricht- und Dickenhobelmaschine, ohne eigenen Antriebsmotor motorlich heben und senken zu können, ist die aus drehbaren Gewindespindeln (27 und 31) sowie fest mit dem Arbeitstisch (23) verbundenen Muttern (32, 33) gebildete Hubvorrichtung an- und abkuppelbar mit dem Motorantrieb der Werkzeugmaschine, insbesondere einem speziellen Teil davon, nämlich dem Vorschubwalzenantrieb, verbunden. Rechts- und Linkslauf der Gewindespindeln (27, 31) und damit das Heben und Senken des Arbeitstisches (23) wird dadurch gewährleistet, daß ein vom Vorschubwalzenantrieb angetriebenes, an einem Schwenkhebel gelagertes Rad (22), wahlweise mit einem von zwei antreibbaren Rädern (24, 25) des Tisch-Hubantriebs kuppelbar ist, wobei die Achsen des Rades (22) einerseits sowie der Räder (24) und (25) anderseits senkrecht zueinander stehen. Die antreibbaren Räder (24) und (25) sind drehfest mit einer (27) der Gewindespindeln verbunden.

ACTORUM AG

Mafell Maschinenfabrik

Rudolf Mey GmbH & Co KG


7238 Oberndorf a.N.-Aistaig




Vorrichtung zum Heben und Senken

eines Arbeitstisches einer Werkzeugmaschine.


Die Erfindung bezieht sich auf eine Vorrichtung zum Heben und Senken des Arbeitstisches einer Werkzeugmaschine mit Motorantrieb, insbesondere des Dickentisches einer Abricht- und Dickenhobelmaschine, wobei der Arbeitstisch mittels wenigstens einer Gewindespindel mit Mutter heb- und senkbar ist. Derartige Werkzeugmaschinen, insbesondere Hobelmaschinen, sind an sich bereits bekannt. Auch kann ihr Arbeitstisch mit Motorkraft

- 2 -

angehoben und abgesenkt werden, jedoch ist dazu ein spezieller Antriebsmotor mit zugehörigem Antrieb erforderlich. Infolgedessen benötigt der Antrieb des Tisches bei dieser vorbekannten Maschine relativ viel Platz, und aufgrund des nicht unbeträchtlichen Motorgewichts führt dies auch zu einer Erhöhung des Gesamtgewichts. Darüber hinaus stellt ein Motor bei jeder Maschine immer eine Versagensquelle dar, und deshalb bildet jeder weitere Motor einer Maschine eine Erhöhung der Störanfälligkeit.

Die Aufgabe der Erfindung besteht infolgedessen darin, eine Vorrichtung der eingangs genannten Art so auszubilden, daß das Gewicht, die Störanfälligkeit und gegebenenfalls auch die Größe der Werkzeugmaschine reduziert werden können, ohne auf den motorlichen Antrieb für den Arbeitstisch verzichten zu müssen.

Zur Lösung dieser Aufgabe wird erfindungsgemäß vorgeschlagen, daß die Vorrichtung gemäß dem Oberbegriff des Anspruchs 1 entsprechend dem kennzeichnenden Teil dieses Anspruchs ausgebildet ist. Der Motorantrieb, der nicht notwendigerweise der einzige der Werkzeugmaschine sein und deshalb auch nicht unbedingt das oder die Werkzeuge antreiben muß, wird gemäß der Erfindung mit dem Antrieb der Gewindespindel oder -spindeln dann gekuppelt, wenn der Arbeitstisch höher oder tiefer gestellt werden soll. Dabei ist es unerheblich, ob durch den Antrieb die Gewindespindel oder -spindeln oder die zugehörige Mutter bzw. Muttern

- 3 -

angetrieben werden, jedoch ist in bevorzugter Weise ein Antrieb der Gewindespindeln vorgesehen, während sich die Mutter oder Muttern relativ zum Tisch nicht drehen. Außerdem ist in geeigneter Weise dafür zu sorgen, daß die Gewindespindel oder -spindeln - nachfolgend wird der Einfachheit halber nur noch von Gewindespindeln gesprochen, ohne daß diese einschränkend sein soll - links- und rechtsdrehend antreibbar sind.

In diesem Zusammenhang steht eine Weiterbildung der Erfindung, die durch eine Kupplungsvorrichtung für wahlweisen Rechts- oder Linkslauf der Gewindespindel oder -spindeln gekennzeichnet ist. Diese kann in bekannter Weise ausgebildet und zweckmäßigerweise mechanisch umschaltbar sein.

Eine besonders bevorzugte Ausführungsform der Vorrichtung mit mehreren, insbesondere vier die Ecken eines Rechtecks markierenden Gewindespindeln mit Mutter, kennzeichnet sich dadurch, daß die Gewindespindeln insbesondere über eine Kette oder ein dergleichen flexibles Element drehantriebsverbunden sind und eine dieser Gewindespindeln zwei im Abstand voneinander angeordnete, antreibbare Räder trägt, mit denen ein durch den Motorantrieb angetriebenes Rad, dessen Achse senkrecht zur Längsachse dieser Gewindespindel verläuft, wahlweise in Antriebsverbindung bringbar ist. Hierbei ist es besonders vorteilhaft, wenn das durch den Motorantrieb angetriebene Rad sich genau zwischen den antreibbaren Rädern befindet, so daß man es

- 4 -

mit einer relativ kurzen Verstellbewegung beispielsweise nach oben mit dem einen antreibbaren Rad, und nach unten mit dem anderen antreibbaren Rad in Wirkverbindung bringen kann. Aufgrund der sich kreuzenden Achsen führt dies dann zwangsläufig zu einer Links- bzw. Rechtsdrehung der unmittelbar angetriebenen Gewindespindel, die dann über die Kette od. dgl. die übrigen Gewindespindeln in jeweils gleichem Drehsinne antreibt.

Das angetriebene Rad und die antreibbaren Räder sind in weiterer Ausgestaltung der Erfindung als Kegelzahnräder, Reibräder oder dergleichen Winkelantrieb ausgebildet. Eine mögliche und vor allen Dingen preiswerte Lösung ergibt sich, wenn man an dieser Stelle ein einfaches Zahngetriebe vorsieht.

Eine andere Variante der Erfindung ist dadurch gekennzeichnet, daß das angetriebene Rad an einem schwenkbaren Hebel gelagert ist, dessen Schwenkachse parallel zur Achse des angetriebenen Rades verläuft und der außerdem noch ein koaxiales Ritzel des Motorantriebs der Werkzeugmaschine trägt. Dieses Ritzel und das angetriebene Rad sitzen selbstverständlich drehfest auf einer gemeinssamen Welle, so daß bei einem Drehen des Ritzels zugleich auch immer das angetriebene Rad läuft. Es bedarf dann lediglich noch einer Schwenkbewegung des Hebels nach der einen oder anderen Seite hin, um den Arbeitstisch zu heben oder zu senken. Andererseits ist aber mit dem Abschalten des bzw. des betreffenden Motorantriebs zugleich auch der Antrieb für die

- 5 -

Tischverstellung abgeschaltet, was einen gewissen Unfallschutz bedeutet.

Eine andere bevorzugte Ausbildung einer Vorrichtung einer als Abricht- und Dickenhobelmaschine ausgebildeten Werkzeugmaschine ist dadurch gekennzeichnet, daß der Motorantrieb der Werkzeugmaschine als Antrieb für zumindest die Vorschubwalzen ausgebildet ist und mehrere, über eine Kette verbundene Kettenräder aufweist, von denen außer dem am schwenkbaren Hebel gelagerten noch ein weiteres, als federbelastetes Spannrad ausgebildetes, an einem schwenkbaren Spannhebel gelagertes Kettenrad ortsveränderlich ist. Über das Kettenrad des schwenkbaren Hebels ist ein Trumm der Kette geführt, das beim Ankuppeln eines der beiden antreibbaren Räder des Gewindespindelantriebs nach der einen oder anderen Richtung hin geringfügig verschwenkt wird. Dadurch könnte es ohne besondere Maßnahmen zu einem Lockern oder die Verschwenkung des Hebels zumindest erschwerenden Spannen der Kette kommen. Dies wird verhindert, indem man noch eine andere nachgiebige Stelle schafft, die für einen gewissen Ausgleich sorgen kann. Letzteres wird von dem schwenkbaren Spannhebel mit seinem Kettenrad besorgt. Die Belastungsfeder führt den Spannhebel in seine Ausgangslage zurück, sobald der Hebel in seine Neutrallage gebracht wird. Sie sorgt außerdem für die vorgesehene Spannung der Kette auch bei stillstehendem Antrieb des Dickentisches. Außerdem kann der schwenkbare Hebel in sehr vorteilhafter Weise durch die Zugkraft der Kette in einer

- 6 -

neutralen Lage gehalten werden, also einer Lage, in welcher das
antreibbare Rad weder mit dem einen noch dem anderen der beiden
antreibbaren Räder in Antriebsverbindung steht.

Eine Weiterbildung der Erfindung sieht vor, daß der schwenkbare
Hebel zusätzlich zur Zugkrafteinstellung oder alternativ dazu
mittels einer Verrastvorrichtung, insbesondere eines federbelasteten Bolzens od. dgl., in der Neutrallage gehalten ist.
Hierdurch wird die eingestellte Lage des Arbeitstisches gesichert, was wiederum der Betriebssicherheit der gesamten Maschine zugute kommt.

In der Zeichnung ist ein Ausführungsbeispiel der Erfindung dargestellt. Es zeigen:

Figur 1    eine Vorderansicht einer als Abricht-
           und Dickenhobelmaschine ausgebildeten
           Werkzeugmaschine,

Figur 2    eine Seitenansicht in Pfeilrichtung A
           der Fig. 1.

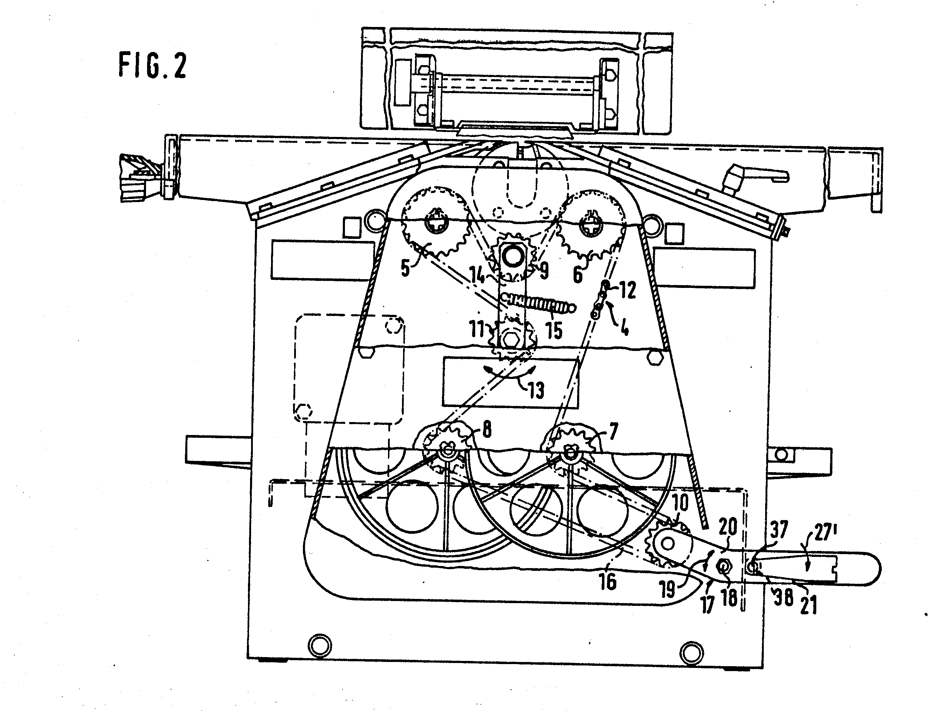

Ein Elektromotor 1 treibt, insbesondere unter Zwischenschaltung
eines Riementriebs 2, die Messerwelle 3 einer Abricht- und
Dickenhobelmaschine an. Außerdem umfaßt der Motorantrieb dieser Hobelmaschine noch einen Vorschubwalzenantrieb 4. Dieser spezielle Teil des Motorantriebs umfaßt fünf festgelagerte Kettenräder 5 bis 9 sowie zwei beweglich gelagerte Kettenräder 10 und 11, über welche eine Kette 12 gemäß Fig. 2 geführt ist. Das Kettenrad 11 bildet ein Spannrad für die Kette 12 und es ist am freien Ende eines im Sinne des Doppelpfeils 13 schwenkbaren Spannhebels 14 gelagert. Eine als Schraubenzugfeder 15 ausgebildete Belastungsfeder ist mit ihrem einen Ende am Spannhebel 14 und mit ihrem anderen am Rahmen oder Gehäuse der Hobelmaschine befestigt.

Über das bewegliche Kettenrad 10 ist ein etwa U-förmiges Trumm 16 der Kette 12 geführt. Es ist an einem um eine feste Achse 18 im Sinne des Doppelpfeils 19 schwenkbaren Hebel 17 gelagert. Dieser Hebel ist als zweiarmiger Hebel ausgebildet, wobei sein einer Hebelarm 20 das bewegliche Kettenrad 10 trägt, während sein anderer Hebelarm 21 eine Handhabe bildet, deren Bedeutung nachfolgend noch näher erläutert wird.

Koaxial zum beweglichen Kettenrad 10 ist auf der Achse 18 des schwenkbaren Hebels 17 ein Zahnrad gelagert, welches ein angetriebenes Rad 22 einer Hub- und Senkvorrichtung für den Arbeitstisch 23 der Hobelmaschine bildet. Es liegt in seiner Ausgangslage zwischen zwei zueinander parallelen, gegenüber dem angetriebenen Rad 22 jedoch um 90° versetzten, antreibbaren Rädern 24 und 25. Auch sie sind als einfache Zahnräder ausgebildet und mit jedem von ihnen kann das angetriebene Rad
22 wahlweise gekuppelt werden. Bei den Rädern 22, 24 und 25
kann es sich aber auch um Reibräder, Kegelräder oder andere,
ein Winkelgetriebe bildende Räder handeln.

Da die angetriebenen Räder 24 und 25 drehfest auf einer Welle
26 gehalten sind, kann man letztere, je nachdem, ob man das
angetriebene Rad 22 mit dem antreibbaren Rad 24 oder 25 kuppelt, rechts- oder linksdrehend antreiben. Drückt man die erwähnte Handhabe, also den anderen Hebelarm 21 des Hebels 16, in
Pfeilrichtung 27' nieder, so führt das zu einer Ankupplung des
antreibbaren Rads 25 an das angetriebene Rad 22 und damit beispielsweise zum Rechtslauf. Den Linkslauf der Welle 26 erreicht
man demnach durch eine Verschwenkung des Hebels 17 entgegen dem
Pfeil 27'.

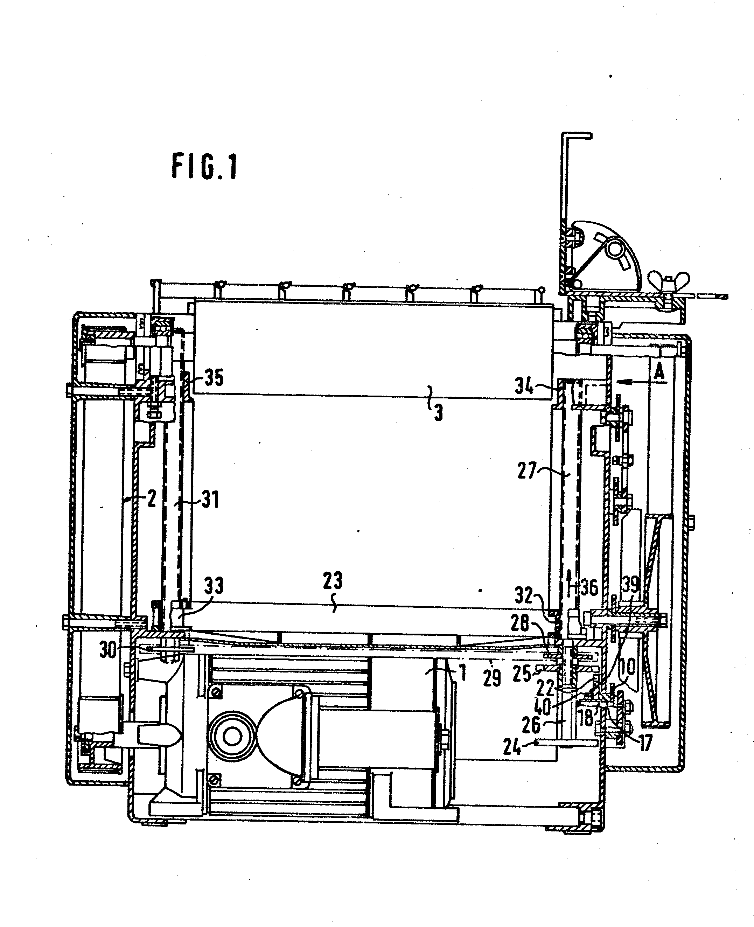

Die Welle 26 ist mit dem in Fig. 1 unteren Ende einer Gewindespindel 27 verbunden oder einstückig hergestellt. Außer den
Rädern 24 und 25 trägt diese Gewindespindel 27 noch ein weiteres, insbesondere als Kettenrad 28 ausgebildetes Rad. Im Falle
eines Kettenrades ist um letzteres eine Kette 29 geführt, die
mit vier weiteren Kettenrädern 29 im Eingriff ist. Jedes dieser
weiteren Kettenräder befindet sich am unteren Ende einer weiteren Gewindespindel 31, deren Längsachsen die vier Ecken eines
Rechtecks markieren und von denen, ebenso wie von den weiteren
Kettenrädern 30, in Fig. 1 eines gezeigt ist. Demnach wird also

- 9 -

mit Hilfe der Kette 29 die Drehung des Kettenrads 28 auf alle weiteren Kettenräder 30 übertragen, so daß sich alle vier Gewindespindeln zugleich und mit gleicher Drehgeschwindigkeit sowie gleichem Drehsinn drehen. Jede dieser Gewindespindeln durchsetzt eine als Doppelbundhülse ausgebildete Mutter 32 bzw. 33. Jede ist einer Ecke des Arbeitstisches 23 zugeordnet und in einem beispielsweise randoffenen Schlitz an der Ecke des Arbeitstisches 23 fest anmontiert. Die oberen Enden der Gewindespindeln 27 bzw. 31 sind in maschinenfesten Lagern 34 bzw. 35 abgestützt.

Da die Gewindespindeln 27, 31 drehbar, aber in axialer Richtung unverschiebbar gelagert sind, bewirkt ihre Drehung im einen Drehsinne eine axiale Verschiebung der Muttern 32, 33, bzw. des Arbeitstisches 23 in Pfeilrichtung 36, während eine gegenläufige Drehung eine Absenkung des zuvor angehobenen Arbeitstisches 23 entgegen dem Pfeil 36 zur Folge hat.

Der schwenkbare Hebel 17 ist allein durch die Zugkraft der Kette 12 in einer neutralen Lage gehalten, in der das angetriebene Rad 22 weder das Rad 24 noch das Rad 25 antreiben kann. Zweckmäßigerweise wird jedoch die neutrale oder Ausgangslage des schwenkbaren Hebels 17 noch gesichert, und zwar mittels eines senkrecht zur Bildebene der Fig. 2 nach oben hin verschiebbaren Bolzens 37, der beispielsweise aufgrund der Kraft einer Belastungsfeder in eine Hülse 38 des schwenkbaren Hebels

- 10 -

17 eingreift. Vor der Verschwenkung des letzteren muß also dieser Bolzen 37 gegen die Kraft seiner Belastungsfeder zurückgezogen werden. Dadurch wird ein versehentliches oder mutwilliges Verschieben des Arbeitstisches 23 sicher verhindert.

Um Schäden bei einem Anstoßen des Arbeitstisches 23 in seinen beiden Extremstellungen zu verhindern, ist noch eine Rutschkupplung zwischen dem angetriebenen Rad 22 und dem Kettenrad 10 angeordnet. Diese besteht aus einer Tellerfeder 39 und einer Mutter mit Kontermutter 40. Das gewünschte zulässige Drehmoment kann dann durch stärkeres oder schwächeres Anziehen der Muttern 40 eingestellt werden.

0090158

- 1 -

14 512

<u>A n s p r ü c h e</u>

1. Vorrichtung zum Heben und Senken eines Arbeitstisches (23) einer Werkzeugmaschine mit Motorantrieb, insbesondere des Dikkentisches einer Abricht- und Dickenhobelmaschine, wobei der Arbeitstisch mittels wenigstens einer Gewindespindel (27) mit Mutter (32) heb- und senkbar ist, dadurch gekennzeichnet, daß der Antrieb der Gewindespindel oder -spindeln (27,31) an- und abkuppelbar mit dem Motorantrieb (4) der Werkzeugmaschine verbunden ist.

2. Vorrichtung nach Anspruch 1, gekennzeichnet durch eine Kupplungsvorrichtung (22, 24, 25) für wahlweisen Rechts- oder Linkslauf der Gewindespindel oder -spindeln (27, 31).

3. Vorrichtung nach Anspruch 2, mit mehreren, insbesondere vier die Ecken eines Rechtecks markierenden Gewindespindeln (27, 31), mit Mutter (32, 33), dadurch gekennzeichnet, daß die Gewindespindeln (27, 31), insbesondere über eine Kette (29) oder ein dergleichen flexibles Element, drehantriebsverbunden sind und eine (27) dieser Gewindespindeln zwei im Abstand

- 2 -

voneinander angeordnete, antreibbare Räder (24, 25) trägt, mit
denen ein durch den Motorantrieb (4) angetriebenes Rad (22),
dessen Achse (18) senkrecht zur Längsachse dieser Gewindespindel (27) verläuft, wahlweise in Antriebsverbindung bringbar
ist.

4. Vorrichtung nach Anspruch 3, dadurch gekennzeichnet, daß
zwischen dem Motorantrieb (4) und dem angetriebenen Rad (22)
eine Überlastkupplung (39, 40) angeordnet ist.

5. Vorrichtung nach Anspruch 3 oder 4, dadurch gekennzeichnet, daß das angetriebene Rad (22) und die antreibbaren Räder
(24, 25) als Kegelzahnräder, Reibräder oder dergleichen Winkelantrieb ausgebildet sind.

6. Vorrichtung nach Anspruch 3,4 oder 5, dadurch gekennzeichnet, daß das angetriebene Rad (22) an einem schwenkbaren Hebel
(17) gelagert ist, dessen Schwenkachse (18) parallel zur Achse
des angetriebenen Rads (22) verläuft und der außerdem noch ein
koaxiales Ritzel (10) des Motorantriebs (4) der Werkzeugmaschine trägt.

7. Vorrichtung nach Anspruch 6 einer als Abricht- und Dickenhobelmaschine ausgebildeten Werkzeugmaschine, dadurch gekennzeichnet, daß der Motorantrieb (4) der Werkzeugmaschine als
Antrieb für zumindest die Vorschubwalzen ausgebildet ist und mehrere, über eine Kette (12) verbundene Kettenräder (5 bis 11), aufweist, von denen außer dem (10) am schwenkbaren Hebel (17) gelagerten noch ein weiteres, als federbelastetes Spannrad ausgebildetes, an einem schwenkbaren Spannhebel (14) gelagertes Kettenrad (11) ortsveränderlich ist.

8.    Vorrichtung nach Anspruch 7, dadurch gekennzeichnet, daß der schwenkbare Hebel (17) durch die Zugkraft der Kette (12) in einer neutralen Lage gehalten ist.

9.    Vorrichtung nach Anspruch 8, dadurch gekennzeichnet, daß der schwenkbare Hebel (17) zusätzlich zur Zugkrafteinstellung oder alternativ dazu mittels einer Verrastvorrichtung, insbesondere eines federbelasteten Bolzens (37) od. dgl., in der Neutrallage gehalten ist.

FIG.1

FIG.2